# EUROPÄISCHE PATENTANMELDUNG

(11) **EP 4 549 836 A1**
(43) Veröffentlichungstag der Anmeldung: **07.05.2025**
(21) Anmeldenummer: 23207761.0
(22) Anmeldetag: 03.11.2023
(51) Int. Cl.: F24S 20/66, F24S 20/67, F24S 40/44, F24S 25/40, H02S 20/23, H02S 30/10, H02S 40/42

(54) **GEHÄUSE ZUM BEFESTIGEN EINES SOLARMODULS**

(71) Anmelder: Schiefergruben Magog GmbH & Co. KG, 57392 Schmallenberg (DE)
(72) Erfinder: SCHÖNFELDER, Paul Otto, 59889 Eslohe (DE)
(74) Vertreter: Michalski Hüttermann & Partner Patentanwälte mbB

(57) **Zusammenfassung**

Die Erfindung betrifft ein Gehäuse (7) zum Befestigen eines Solarmoduls (1) in einem Dach und/oder in einer Wandverkleidung mit einer im betriebsbereiten Zustand der Sonne zugewandten flächigen Seite (8) und eine im betriebsbereiten Zustand der Sonne abgewandten flächigen Seite, das Gehäuse (7) aufweisend
einen Rahmen (9) zum Aufnehmen des Solarmoduls (1) umfassend eine im betriebsbereiten Zustand dem Erdboden abgewandte erste Querseite (T1), eine im betriebsbereiten Zustand dem Erdboden zugewandte zweite Querseite (T2) und zwei zwischen den Querseiten (Ta, T2) angeordneten Längsseiten (L1, L2), wobei der Rahmen (9) dazu ausgestaltet ist, das Solarmodul (1) in einer ersten Ebene anzuordnen,
einen an der der Sonne abgewandten Seite angrenzenden Hohlraum (6), wobei der Hohlraum (6) in einer zweiten zu der ersten Ebene unterschiedlichen Ebene angeordnet ist,
einen an der ersten Querseite (T1) angeordneten Einlass (10), der dazu ausgestaltet ist, ein Fluid in den Hohlraum (6) zu leiten und einen an der zweiten Querseite (T2) angeordneten Auslass (11), der dazu ausgestaltet ist, das Fluid aus dem Hohlraum (6) abzuleiten, und
eine Auffangwanne (12), die derart in einer zu der ersten und zweiten Ebene unterschiedlichen dritten Ebene angeordnet ist, dass der Hohlraum (6) zwischen dem Solarmodul (1) und der Auffangwanne (12) eingeschlossen wird.
Auf diese Weise wird ein Gehäuse für ein Solarmodul bereitgestellt, das eine dachintegrierte Montage auch ohne vorhandene Hinterlüftung ermöglicht.

## Beschreibung

Die Erfindung betrifft ein Gehäuse zum Befestigen eines Solarmoduls in einem Dach und/oder in einer Wandverkleidung mit einer im betriebsbereiten Zustand der Sonne zugewandten flächigen Seite und eine im betriebsbereiten Zustand der Sonne abgewandten flächigen Seite.

Solarmodule einer Photovoltaik Anlage können zur Energiegewinnung entweder auf dem Dach oder in dem Dach bzw. dachintegriert montiert werden. Beide Möglichkeiten haben Vor- und Nachteile. Aufdach-Lösungen können bei bereits bestehendem Dächern besonders einfach nachgerüstet werden. Die Montage ist weniger aufwendig und dadurch kostengünstiger. Sie bieten jedoch auch einer größere Angriffsfläche für Wind und Stürme und sind daher mechanisch instabiler als Indach-Lösungen. Die Indach-Lösungen bieten nicht nur ein ästhetisch ansprechendes einheitliches Gesamtbild, sie sind auch deutlich stabiler und weniger anfällig für Wind und Stürme. Die Modulmontage spart Material und Arbeitsaufwand des Dachdeckers ein, da die Solarmodule je nach Eignung auch als harte Bedachung verwendet werden können.

Eine wesentliche Gemeinsamkeit ist jedoch, dass die Solarmodule unabhängig von der Befestigungstechnik eine Hinterlüftung aufweisen sollten, um eine optimale Funktionsfähigkeit der Module gewährleisten zu können und eine hohe Effizienz zu erreichen. Im Bereich der Dacheindeckung bezieht sich eine Hinterlüftung auf die Schaffung eines Luftspalts zwischen der Dachdeckung und der darunterliegenden Dachkonstruktion. Dieser Luftspalt ermöglicht eine kontrollierte Luftzirkulation, die dazu dient, Feuchtigkeit und Wärme abzuführen. Eine Hinterlüftung im Dachbereich kann dazu beitragen, die Lebensdauer des Dachs zu verlängern, indem sie die Bildung von Feuchtigkeit, Schimmel und anderen Schäden reduziert. Es ist wichtig, dass die Hinterlüftung entsprechend den spezifischen Anforderungen und Empfehlungen für das jeweilige Dachsystem ausgeführt wird. Bei der Montage von Solarmodulen auf dem Dach wird diese Hinterlüftung durch den Abstand des Solarmoduls zum Dach bedingt durch ein Montagegestell ermöglicht. Bei der Montage in dem Dach bzw. dachintegriert entfällt dieses Montagegestell.

Im Dachbau ist eine Konterlattung vorgesehen, die in vertikaler Richtung verläuft. Die Latten liegen auf den Sparren. Die Dachlatten, welche die Dachdeckung tragen, sind dann quer auf die Konterlattung genagelt. Nach den Fachregeln für Dachdeckungen ist über Unterdächern, Unterdeckungen oder Unterspannungen ein Abstand von mindestens 30 mm Dicke zwischen Unterdach und Deckung erforderlich. Der Abstand wird als notwendig angesehen, um den Abfluss von auf das Unterdach eingedrungenem Wasser sicherzustellen und die Deckung zu hinterlüften. Die Konterlattung ermöglicht somit diesen Abstand als Hinterlüftung zu nutzen. Herkömmlich gedeckte Dächer weisen demnach in der Regel eine Hinterlüftung unter der Deckung auf. Diese ist für die Montage von dachintegrierten Solarmodulen ausreichend.

Es gibt jedoch auch Fälle, in denen das Dach keine Konterlattung bzw. keinen Abstand zwischen Unterdach und Deckung aufweist. Dies ist beispielsweise bei Dächern der Fall, die mit Schiefer eingedeckt wurden. Bei Dächern, die ohne Wärmedämmung oder mit diffusionsoffenen Materialien, wie beispielsweise Schiefer, eingedeckt wurden, ist eine Hinterlüftung nicht erforderlich. Der mittels der Hinterlüftung gewährleistete Luftaustausch ist besonders bei Dächern mit Wärmedämmung wichtig, da auf diese Weise Feuchtigkeit abtransportiert werden kann.

Insbesondere für diese Fälle ist es für eine dachintegrierte Montage von Solarmodulen erforderlich, eine Hinterlüftung hinter bzw. unter den Solarmodulen zu schaffen.

Die aus dem Stand der Technik bekannten Montagevorrichtungen für dachintegrierte Solarmodule können für eine optimale Funktionsfähigkeit nur mit einer vorhandenen Hinterlüftung im Dach verwendet werden.

Davon ausgehend ist es die Aufgabe der Erfindung, ein Gehäuse für ein Solarmodul bereitzustellen, das eine dachintegrierte Montage auch ohne vorhandene Hinterlüftung bei einer optimalen Funktionsfähigkeit ermöglicht.

Diese Aufgabe wird durch den Gegenstand des Patentanspruchs 1 gelöst. Bevorzugte Weiterbildungen finden sich in den Unteransprüchen.

Erfindungsgemäß ist somit ein Gehäuse zum Befestigen eines Solarmoduls in einem Dach und/oder in einer Wandverkleidung vorgesehen, mit einer im betriebsbereiten Zustand der Sonne zugewandten flächigen Seite und eine im betriebsbereiten Zustand der Sonne abgewandten flächigen Seite, das Gehäuse aufweisend
einen Rahmen zum Aufnehmen des Solarmoduls umfassend eine im betriebsbereiten Zustand dem Erdboden abgewandte erste Querseite, eine im betriebsbereiten Zustand dem Erdboden zugewandte zweite Querseite und zwei zwischen den Querseiten angeordneten Längsseiten, wobei der Rahmen dazu ausgestaltet ist, das Solarmodul in einer ersten Ebene anzuordnen,
einen an der der Sonne abgewandten Seite angrenzenden Hohlraum, wobei der Hohlraum in einer zweiten zu der ersten Ebene unterschiedlichen Ebene angeordnet ist,
einen an der ersten Querseite angeordneten Einlass, der dazu ausgestaltet ist, ein Fluid in den Hohlraum zu leiten und einen an der zweiten Querseite angeordneten Auslass, der dazu ausgestaltet ist, das Fluid aus dem Hohlraum abzuleiten, und
eine Auffangwanne, die derart in einer zu der ersten und zweiten Ebene unterschiedlichen dritten Ebene angeordnet ist, dass der Hohlraum zwischen dem Solarmodul und der Auffangwanne eingeschlossen wird.

Ist vorliegend die Reden von einem "Dach" ist damit jede Wand bzw. Fläche mit einem Neigungswinkel vorzugsweise zwischen 5° und 90° gemeint. Bei einem Neigungswinkel von 90° ist auch die Rede von einer Wand bzw. Wandverkleidung.

Unter "Fluid" wird vorliegend insbesondere eine gasförmige und fließfähige Substanz, bevorzugt Luft, verstanden.

Es ist somit ein maßgeblicher Punkt der Erfindung, dass durch den hinter bzw. unter dem Solarmodul angeordneten Hohlraum des Gehäuses ein Luftaustausch stattfinden kann und somit eine Hinterlüftung ermöglicht wird. Das Schaffen einer Hinterlüftung ist mit besonderen Herausforderungen verknüpft, da dachintegrierte Solarmodule gleichzeitig als Eindeckung verwendet werden und somit besondere Anforderungen erfüllen müssen. Zum einen ist es erforderlich, dass der Bereich unter dem Solarmodul vor Regen, einem Regen-Schnee-Gemisch, Schnee und/oder Eis geschützt wird. Dies wird erfindungsgemäß dadurch realisiert, dass der Hohlraum nicht einfach durch einen Abstand zwischen Solarmodul und Unterdach geschaffen wird. Vielmehr wird als Hohlraum ein geschlossener hohler Bereich verstanden, der einen Einlass und einen Auslass aufweist, über den das Fluid, insbesondere die Umgebungsluft, in den Hohlraum eintreten und aus dem Hohlraum wieder austreten kann, sodass eine Hinterlüftung entsteht.

Unter "Solarmodul" wird insbesondere ein Panel verstanden, welches Licht in elektrische und/oder thermische Energie umwandelt. Das Solarmodul kann Teil einer Photovoltaikanlage und/oder einer Solarthermieanlage und/oder einer sonstigen Anlage sein.

Vorliegend ist mit "Einlass" und "Auslass" insbesondere keine Beschränkung der Fluidstromrichtung gegeben. "Einlass" und "Auslass" sind vorliegend aus Richtung vom Erdboden in Richtung Himmel beschrieben. Eine entgegen gesetzte Fluidstromrichtung ist ebenfalls umfasst.

Ist vorliegend die Rede von einem "Rahmen" wird damit insbesondere eine Aufnahmevorrichtung verstanden, die das Solarmodul entlang des Umfangs aufnimmt. Dies kann sowohl ein Rahmen im Sinne eines Bilderrahmens sein, der sowohl an der der Sonne zugewandten Seite als auch an der der Sonne abgewandten Seite offen ist, als auch ein Rahmen mit einer geschlossenen der Sonne abgewandten Seite sein. Der Rahmen ermöglicht eine Solarmodultyp-unabhängige Montage. Das Solarmodul ist vorzugsweise schwimmend gelagert, sodass es lediglich von dem Rahmen gehalten, aber nicht verschraubt oder anderweitig fixiert wird. Ein Solarmodul beliebiger Hersteller kann demnach in den Rahmen eingesetzt werden.

Es ist ein maßgeblicher Punkt der Erfindung, dass das Gehäuse einen Schichtaufbau umfasst. Die mehreren Ebenen sind parallel schichtartig angeordnet. Im betriebsbereiten Zustand, also in einem Zustand, in dem das Gehäuse in dem Dach montiert und das Solarmodul eingesetzt und angeschlossen ist, umfasst der Schichtaufbau auf der äußeren der Sonne zugewandten Seite das Solarmodul, anschließend den Hohlraum mit der Hinterlüftung und abschließend die Auffangwanne auf der dem Unterdach zugewandten Seite.

Ferner ist es aus Sicherheitsgründen von Vorteil, eine thermische Trennung zwischen dem Solarmodul und dem Unterdach zu schaffen, sodass bei elektrischen Fehlfunktionen und möglichen Funken oder Bränden das Unterdach abgeschirmt ist. Diese Funktion wird erfindungsgemäß von der Auffangwanne, die vorzugsweise aus Aluminium besteht, übernommen. Unter "Auffangwanne" wird vorliegend insbesondere ein flacher deckelloser Behälter mit einer 90°-Falz verstanden. Die 90°-Falz umgibt das Gehäuse zumindest teilweise, sodass dieses innerhalb der Auffangwanne angeordnet ist. Die Querseiten der Auffangwanne sind dabei insbesondere glatt ausgebildet, damit ein Aneinanderlegen mehrerer Gehäuse möglich ist. Somit dient die Auffangwanne einerseits als wasserführende Ebene, indem Wasser, das durch das Solarmodul hindurchtritt, aufgefangen und direkt schnellstmöglich abgeleitet werden kann. Eine wasserführende Ebene ist die Schicht in einem Dachaufbau, die die regensichere Ableitung von Niederschlagswasser vom First zur Traufe erzielt. Die Auffangwanne übernimmt die Funktion einer wasserführenden Ebene. Andererseits dient die Auffangwanne als thermische Trennung und Schutz des Unterdachs.

Gemäß einer bevorzugten Weiterbildung der Erfindung ist an wenigstens einer Längsseite ein Wasserlauf zum Auffangen und Ableiten von Wasser angeordnet. Das eingesetzte Solarmodul selbst ist ebenfalls eine wasserführende Ebene. Das Hauptwasser wird immer über das Solarmodul selbst abfließen. Dieses Hauptwasser wird am Rand des Solarmoduls in einem Wasserlauf aufgefangen und abwärts in Richtung Dachtraufe abgeleitet. Damit kann gewährleistet werden, dass das Niederschlagswasser von der Oberfläche des Solarmoduls abgeleitet werden kann und bei der dachintegrierten Montage der Solarmodule die Fläche mit Ablaufmöglichkeiten versetzt wird. Unter "Wasser" bzw. "Niederschlagswasser" wird insbesondere Regenwasser, Spritzwasser, aber auch geschmolzener Schnee, Schneeverwirbelung bzw. ein Schnee-Wasser-Gemisch verstanden.

Gemäß einer bevorzugten Weiterbildung der Erfindung weist der Wasserlauf an wenigstens einer Längsseite eine Aufnahmevorrichtung zum insbesondere flächenbündigen Aufnehmen einer Bedachung auf. Je nach Bedachung ist diese Aufnahmevorrichtung unterschiedlich ausgestaltet und auf die Art der Bedachung abgestimmt, damit eine insbesondere flächenbündige Montage des Solarmoduls erfolgen kann. Zu den Arten der Bedachung zählen insbesondere Tonziegel, Betondachsteine, Bieberschwanzziegel und/oder Schiefer. "Flächenbündig" bedeutet, dass zwei oder mehrere Objekte oder Oberflächen ohne sichtbare oder spürbare Übergänge oder Stufen direkt aneinander angrenzen. Sie liegen dabei auf derselben Ebene und schließen nahezu bündig ab, sodass keine großen Lücken oder Überhänge entstehen.

Gemäß einer bevorzugten Weiterbildung der Erfindung ist der Einlass und/oder der Auslass schlitzförmig ausgestaltet. "Schlitzförmig" bedeutet vorliegend insbesondere, dass der Einlass und/oder Auslass Öffnungen jeweils in Form eines schmalen, langen Spalts oder Schlitzes aufweist. Es beschreibt eine längliche Öffnung oder einen Einschnitt, der in der Regel langgestreckt und schmal ist. Ein schlitzförmiges Objekt oder eine schlitzförmige Öffnung ähnelt einem dünnen Schlitz oder einer schmalen Spalte.

Gemäß einer bevorzugten Weiterbildung der Erfindung weist der Rahmen entlang wenigstens eines Teils seines Umfangs eine Falz auf, die das Solarmodul in einer Richtung senkrecht und/oder parallel zur ersten Ebene fixiert. Mit der Falz ist insbesondere ein 180° Umschlag gemeint. Dadurch entsteht eine C-Form, in die das Solarmodul eingeführt wird, sodass der Umschlag das Solarmodul gegen ein Abheben, also eine Bewegung senkrecht zur ersten Ebene und/oder gegen ein Rutschen, also eine Bewegung parallel zur ersten Ebene, absichert. Mit "fixieren" ist insbesondere das Erzeugen eines unbeweglichen Zustands gemeint. Der unbewegliche Zustand ermöglicht kleinste Bewegungen, sodass das Solarmodul schwimmend in dem Rahmen angeordnet ist, jedoch große Bewegungen unterbunden werden. Somit wird insgesamt die Stabilität verbessert.

Gemäß einer bevorzugten Weiterbildung der Erfindung ist an der ersten Querseite eine Abdeckung zum Aufnehmen der Bedachung und Abdecken des Auslasses angeordnet, wobei die Abdeckung den Auslass abdeckt und einen Abfluss des Fluids seitlich am Solarmodul zwischen Solarmodul und Bedachung ermöglicht. Der Auslass wird somit vor Eintritt von Niederschlagswasser geschützt bzw. abgeschirmt. Gleichzeitig wird an dieser Abdeckung die Dacheindeckung angelegt. Damit jedoch das Fluid aus dem Hohlraum entweichen kann, wird die Dacheindeckung nicht derart angelegt, dass der Auslass versperrt ist. Das Fluid kann aus dem Auslass über die Abdeckung seitlich an der Bedachung vorbei austreten, sodass eine Hinterlüftung auch bei direkt angelegter flächenbündiger Bedachung ermöglicht wird.

Erfindungsgemäß ist weiterhin ein dachintegriertes Solarsystem mit wenigstens einem oben beschriebenen Gehäuse und wenigstens einem Solarmodul vorgesehen, wobei das Solarmodul in dem Rahmen des wenigstens einen Gehäuses angeordnet ist. Zusammen mit dem oben beschriebenen Gehäuse wird die Kombination aus Gehäuse und Solarmodul bereitgestellt. Das Solarmodul wird in den Rahmen eingeführt und durch den Rahmen an den Längsseite und/oder Querseiten fixiert. Die Bedachung wird direkt an das Gehäuse angelegt, sodass das Solarmodul mit integrierter Hinterlüftung in dem Dach integriert werden kann.

Es ist ein wesentlicher Punkt der Erfindung, dass mit dem dachintegrierten Solarsystem eine Kombination aus Dacheindeckung und Energieerzeugung bereitgestellt werden kann. Das dachintegrierte Solarsystem ersetzt somit die Dacheindeckung mit Ziegeln, Schiefer oder anderer Materialien. Somit können Kosten für das Material als auch für die Dacharbeiten eingespart werden.

Gemäß einer bevorzugten Weiterbildung der Erfindung umfasst das dachintegrierte Solarsystem eine Mehrzahl an Gehäusen, wobei die Gehäuse jeweils an den Längsseiten derart miteinander verbindbar sind, dass ein zweites Gehäuse an einem ersten Gehäuses angeordnet ist und/oder die Gehäuse jeweils an den Querseiten derart miteinander verbindbar sind, dass der Einlass eines zweiten Gehäuses an dem Auslass des ersten Gehäuses angeordnet ist. Auf diese Weise kann eine beliebig große Fläche in Form einer n x m Matrix aus mehreren Solarmodulen aufgebaut werden. Die Gehäuse werden derart angeordnet, dass zwischen den Längsseiten zweier Gehäuse ein Abstand von insbesondere wenige Millimeter entsteht, der vorzugsweise mit einer zusätzlichen Abdeckung abgedeckt und somit vor äußeren Umwelteinflüssen abgeschirmt wird. In vertikaler Richtung zwischen Erdboden und Himmel werden die Gehäuse derart angeordnet, dass ein einheitlicher Fluidstrom gewährleitet ist, indem ein Auslass an den benachbarten Einlass angeordnet wird. Eintretende Luft kann somit unter der Gesamtheit der Solarmodule zirkulieren und von einem Hohlraum in den nächsten geleitet werden. Kleinste Abstände zwischen den Gehäuse, insbesondere zwischen 4cm bis 5cm, werden mittels Verbindungsschienen abgedeckt, sodass Niederschlagswasser abgeleitet und nicht in die Abstände zwischen den Gehäusen treten kann.

Erfindungsgemäß ist weiterhin das Verwenden eines oben beschriebenen zum Montieren und Integrieren eines Solarmoduls in eine Bedachung ohne Hinterlüftung, insbesondere in ein Schieferdach, vorgesehen. Durch die Konstruktion von Dächern ohne Konterlattung entfällt der Abstand zwischen Solarmodul und Unterdach. Für diese Fälle wird das oben beschriebenen Gehäuse zur dachintegrierten Montage von Solarmodulen verwendet.

Erfindungsgemäß ist weiterhin das Verwenden eines oben geschriebenen dachintegrierten Solarsystems mit einem Gehäuse und einem Solarmodul als harte Bedachung. Unter einer "harten Bedachung" wird insbesondere eine Dacheindeckung verstanden, die nach DIN 4102 Teil 4 ausreichend resistent gegen strahlende Wärme und Flugfeuer ist. Damit soll eine Brandausbreitung z. B. vom in Brand stehenden Nachbargebäude verhindert werden. Ist die Dacheindeckung nicht "hart", müssen größere Abstände zu den Grundstücksgrenzen eingehalten werden.

Nachfolgend wird die Erfindung anhand eines bevorzugten Ausführungsbeispiels unter Bezugnahme auf die Zeichnungen weiter im Detail erläutert.

In den Zeichnungen zeigen
- Fig. 1a: eine schematische Schnittansicht einer dachintegrierten Montage eines Solarmoduls gemäß dem Stand der Technik,
- Fig. 1b: eine schematische Schnittansicht einer dachintegrierten Montage eines Solarmoduls gemäß einem bevorzugten Ausführungsbeispiel der Erfindung,
- Fig. 2: eine schematische Ansicht eines Gehäuses mit Solarmodul gemäß einem bevorzugten Ausführungsbeispiel der Erfindung in einer perspektivischen Ansicht,
- Fig. 3: eine schematische Ansicht eines Gehäuses mit Solarmodul gemäß einem weiteren bevorzugten Ausführungsbeispiel der Erfindung in einer perspektivischen Ansicht,
- Fig. 4: eine schematische Ansicht eines vergrößerten Bereichs des Gehäuses mit Solarmodul gemäß einem bevorzugten Ausführungsbeispiel der Erfindung in einer perspektivischen Ansicht.

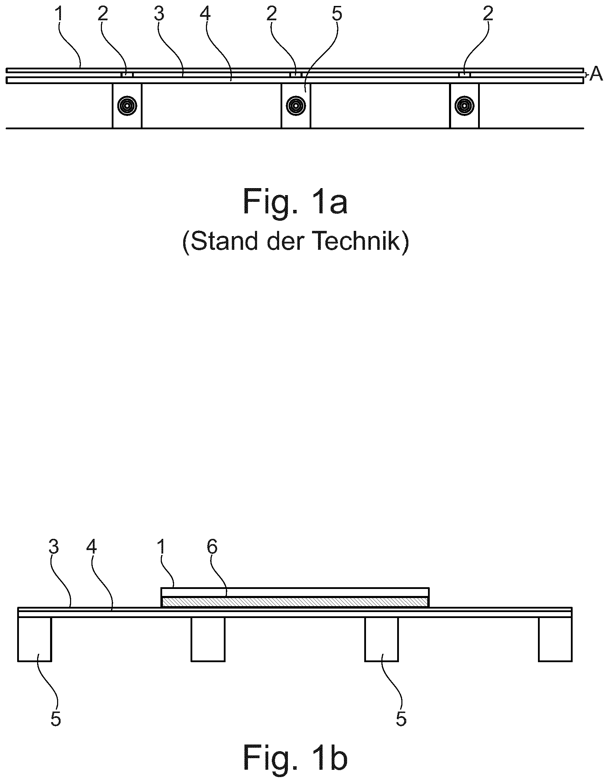

Aus Fig. 1a und Fig. 1b ist schematisch eine Schnittansicht durch ein montiertes Solarmodul 1 gezeigt. Fig. 1a zeigt dabei eine Aufdachkonstruktion gemäß dem Stand der Technik. Die Dachkonstruktion umfasst Sparren 5 und auf den Sparren 5 angeordnete Schalung 4. Auf der Schalung 4 verläuft die Spannbahn 3, auf der die Konterlattung 2 angeordnet ist. Auf der Konterlattung 2 wird das Solarmodul montiert. Die Dacheindeckung wird links, rechts, oben und unten an das Solarmodul flächenbündig angelegt und ist in der Schnittansicht nicht gezeigt. Es ist in Fig. 1a erkennbar, dass auf Grund der Konterlattung 2 der Dachkonstruktion ein Abstand A zwischen Solarmodul 1 und Schalung 4 entsteht, der als Hinterlüftung fungiert.

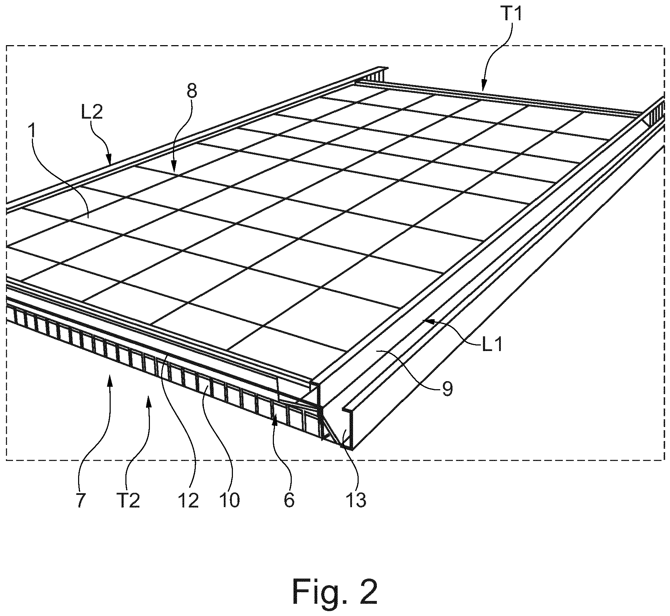

Fällt diese Konterlattung 4 weg, weil die Dachkonstruktion diese nicht hergibt, wie dies beispielsweise bei Schieferdächern der Fall ist, fällt auch der Abstand A und somit die Hinterlüftung weg. Das Solarmodul 1 wird für eine dachintegrierte Montage direkt auf die Schalung 4 bzw. die Spannbahn 3 montiert. Die dennoch erforderliche Hinterlüftung wird in diesem Fall erfindungsgemäß durch einen im Gehäuse 7 des Solarmoduls 1 integrierten Hohlraum 6 realisiert. Das Gehäuse 7 mit bereits angeordnetem Solarmodul 1 wird in den nachfolgenden Figuren 2 bis 4 gezeigt.

Fig. 2 zeigt dabei ein Gehäuse 7 zum dachintegrierten Montieren des Solarmoduls 1. Das Gehäuse umfasst einen Rahmen 9, in den das Solarmodul 1 mit der der Sonne zugewandten Seite 8 nach oben in den Rahmen 9 eingeführt ist. Das Solarmodul ist dann in einer ersten Ebene angeordnet. Unter dem Solarmodul 1 ist in einer zweiten Ebene ein Hohlraum 6 im Gehäuse angeordnet. Dieser Hohlraum 6 ist durch den Einlass 10 und den Auslass 11 für ein Fluid, wie beispielsweise die Umgebungsluft, zugänglich. Auf diese Weise kann unter dem Solarmodul 1 eine Hinterlüftung realisiert werden. In einer dritten Ebene ist eine Auffangwanne 12 angeordnet, die als wasserführende Ebene und thermische Trennung zwischen Solarmodul 1 und der Unterdachkonstruktion fungiert. Auf diese Weise entsteht ein Schichtaufbau aus: Solarmodul 1, Hohlraum 6 bzw. Hinterlüftung, Auffangwanne 12 und Unterdachkonstruktion (hier nicht dargestellt). Die Umgebungsluft kann auf der zweiten Querseite T2 durch den schlitzförmigen Einlass 10 eindringen, unter dem Solarmodul durch den Hohlraum 6 strömen und auf der ersten Querseite T1 durch den Auslass 11 wieder herausströmen. Auf einer Längsseite L1 ist zudem ein Wasserlauf 13 angeordnet, der abfließendes Wasser ähnlich einer Regenrinne auffängt und weiterleitet.

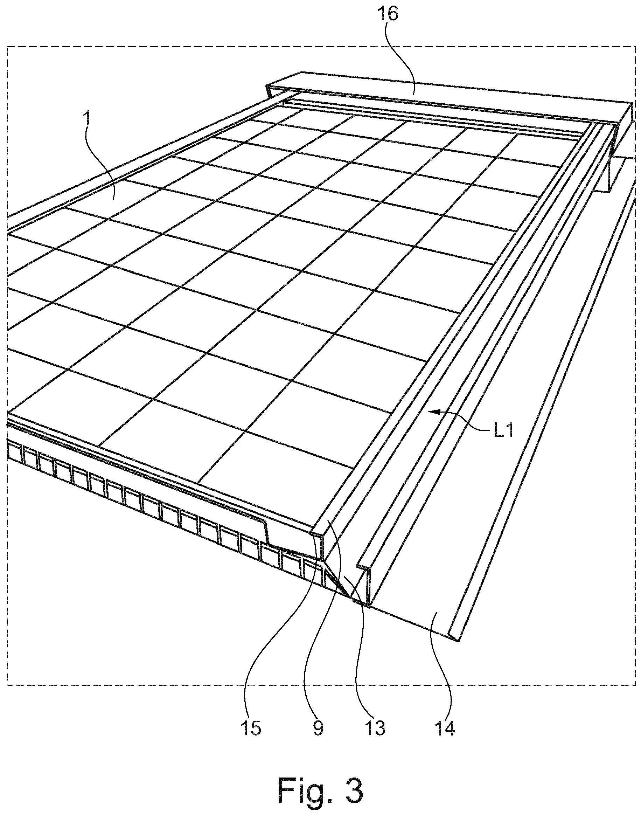

Um das Solarmodul dachintegriert montieren zu können, ist es erforderlich, dass die Bedachung an das Gehäuse montiert werden kann. Dazu weist der Wasserlauf 13 eine Aufnahmevorrichtung 14 auf, die in Fig. 3 dargestellt ist. Die Aufnahmevorrichtung kann nach Art eines Adapters ausgetauscht und für beliebige Arten an Bedachungen ausgewählt werden. In die Aufnahmevorrichtung 14 wir die Bedachung befestigt, sodass insgesamt ein ästhetisch ansprechendes Gesamtbild einer dachintegrierten Montage entsteht.

Fig. 3 zeigt ferner eine Abdeckung 16, die den Auslass 11 abdeckt und vor dem Eindringen von Regen, Schnee oder Schmutz bewahrt. Der Rahmen 9 umfasst eine C-förmige 180°-Falz 15, die das Solarmodul vor unerwünschten Bewegungen, wie beispielsweise das Abheben bei Windeinwirkung, schützt. Das Solarmodul wird in dem Rahmen 9 schwimmend gelagert und lediglich über den Rahmen 9 bzw. die Falz 15 befestigt.

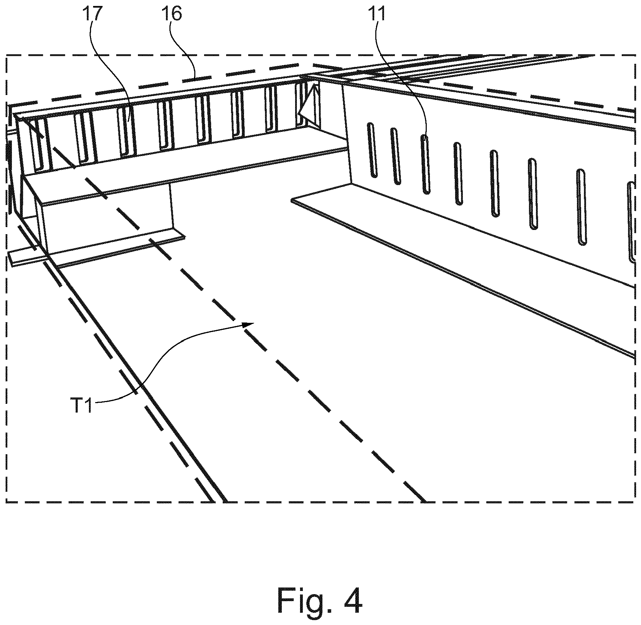

An der ersten Querseite T1 wird die Bedachung an den Auslass 11 gelegt, damit ein einheitliches Gesamtbild entsteht. Damit das Fluid jedoch weiterhin aus dem Hohlraum ausströmen kann, weist die Abdeckung 16, durch die in Fig. 4 hindurch geblickt wird, einen seitlichen Auslass 17 auf. Die Bedachung wird bis auf wenige Zentimeter an den Auslass 11 heran gelegt und mittels der Abdeckung 16 abgedeckt. Ein Austritt des Fluids ist dann über den seitlichen Auslass 17 weiterhin möglich.

### Bezugszeichenliste

- 1: Solarmodul
- 2: Konterlattung
- 3: Spannbahn
- 4: Schalung
- 5: Sparren
- 6: Hohlraum
- 7: Gehäuse
- 8: der Sonne zugewandte Seite
- 9: Rahmen
- 10: Einlass
- 11: Auslass
- 12: Auffangwanne
- 13: Wasserlauf
- 14: Aufnahmevorrichtung
- 15: Falz
- 16: Abdeckung
- 17: seitlicher Auslass

- A: Abstand
- T1: erste Querseite
- T2: zweite Querseite
- L1: erste Längsseite
- L2: zweite Längsseite

## Patentansprüche

1. Gehäuse (7) zum Befestigen eines Solarmoduls (1) in einem Dach und/oder in einer Wandverkleidung mit einer im betriebsbereiten Zustand der Sonne zugewandten flächigen Seite (8) und eine im betriebsbereiten Zustand der Sonne abgewandten flächigen Seite, das Gehäuse (7) aufweisend
einen Rahmen (9) zum Aufnehmen des Solarmoduls (1) umfassend eine im betriebsbereiten Zustand dem Erdboden abgewandte erste Querseite (T1), eine im betriebsbereiten Zustand dem Erdboden zugewandte zweite Querseite (T2) und zwei zwischen den Querseiten (Ta, T2) angeordneten Längsseiten (L1, L2), wobei der Rahmen (9) dazu ausgestaltet ist, das Solarmodul (1) in einer ersten Ebene anzuordnen,
einen an der der Sonne abgewandten Seite angrenzenden Hohlraum (6), wobei der Hohlraum (6) in einer zweiten zu der ersten Ebene unterschiedlichen Ebene angeordnet ist,
einen an der ersten Querseite (T1) angeordneten Einlass (10), der dazu ausgestaltet ist, ein Fluid in den Hohlraum (6) zu leiten und einen an der zweiten Querseite (T2) angeordneten Auslass (11), der dazu ausgestaltet ist, das Fluid aus dem Hohlraum (6) abzuleiten, und
eine Auffangwanne (12), die derart in einer zu der ersten und zweiten Ebene unterschiedlichen dritten Ebene angeordnet ist, dass der Hohlraum (6) zwischen dem Solarmodul (1) und der Auffangwanne (12) eingeschlossen wird.

2. Gehäuse (7) nach Anspruch 1, wobei an wenigstens einer Längsseite (L1, L2) ein Wasserlauf (13) zum Auffangen und Ableiten von Wasser angeordnet ist.

3. Gehäuse (7) nach Anspruch 2, wobei an wenigstens einer Längsseite (L1, L2) der Wasserlauf (13) eine Aufnahmevorrichtung (14) zum Aufnehmen einer Bedachung aufweist.

4. Gehäuse (7) nach einem der vorherigen Ansprüche, wobei der Einlass (10) und/oder der Auslass (11) schlitzförmig ausgestaltet ist.

5. Gehäuse (7) nach einem der vorherigen Ansprüche, wobei der Rahmen (9) entlang wenigstens eines Teils seines Umfangs eine Falz (15) aufweist, die das Solarmodul (1) in einer Richtung senkrecht und/oder parallel zur ersten Ebene fixiert.

6. Gehäuse (7) nach einem der vorherigen Ansprüche, wobei an der ersten Querseite (T1) eine Abdeckung (16) zum flächenbündigen Aufnehmen der Bedachung und Abdecken des Auslasses (11) angeordnet ist, wobei die Abdeckung (16) den Auslass (11) abdeckt und einen Abfluss des Fluids seitlich zwischen Solarmodul (1) und Bedachung ermöglicht.

7. Dachintegriertes Solarsystem mit wenigstens einem Gehäuse (7) nach einem der vorherigen Ansprüche und wenigstens einem Solarmodul (1), wobei das Solarmodul (1) in den Rahmen (9) des wenigstens einen Gehäuses (7) angeordnet ist.

8. Dachintegriertes Solarsystem nach Anspruch 7 umfassend eine Mehrzahl an Gehäuse (7), wobei die Gehäuse (7) jeweils an den Längsseiten (L 1, L2) derart miteinander verbindbar sind, dass ein zweites Gehäuse an einem Gehäuse angeordnet ist und/oder die Gehäuse (7) jeweils an den Querseiten (T1, T2) derart miteinander verbindbar sind, dass der Einlass (10) eines zweiten Gehäuses an dem Auslass (11) des ersten Gehäuses angeordnet ist.

9. Verwendung eines Gehäuses (7) nach einem der Ansprüche 1 bis 6 zum Montieren und Integrieren eines Solarmoduls (1) in eine Bedachung ohne Hinterlüftung, insbesondere in ein Schieferdach.

10. Verwenden eines dachintegrierten Solarsystems nach Anspruch 7 oder 8 als harte Bedachung.

## Geänderte Patentansprüche

### Geänderte Patentansprüche gemäss Regel 137(2) EPÜ.

1. Gehäuse (7) zum Befestigen eines Solarmoduls (1) in einem Dach und/oder in einer Wandverkleidung mit einer im betriebsbereiten Zustand der Sonne zugewandten flächigen Seite (8) und eine im betriebsbereiten Zustand der Sonne abgewandten flächigen Seite, das Gehäuse (7) aufweisend
einen sowohl an der der Sonne zugewandten Seite als auch an der der Sonne abgewandten Seite offen ausgestalteter Rahmen (9) zum Aufnehmen des Solarmoduls (1) entlang des Umfangs des Solarmoduls umfassend eine im betriebsbereiten Zustand dem Erdboden abgewandte erste Querseite (T1), eine im betriebsbereiten Zustand dem Erdboden zugewandte zweite Querseite (T2) und zwei zwischen den Querseiten (T1, T2) angeordneten Längsseiten (L1, L2), wobei der Rahmen (9) dazu ausgestaltet ist, das Solarmodul (1) in einer ersten Ebene anzuordnen,
einen an der der Sonne abgewandten Seite angrenzenden Hohlraum (6), wobei der Hohlraum (6) in einer zweiten zu der ersten Ebene unterschiedlichen Ebene angeordnet ist,
einen an der zweiten Querseite (T2) angeordneten Einlass (10), der dazu ausgestaltet ist, ein Fluid in den Hohlraum (6) zu leiten und einen an der ersten Querseite (T1) angeordneten Auslass (11), der dazu ausgestaltet ist, das Fluid aus dem Hohlraum (6) abzuleiten, und
eine Auffangwanne (12), die derart in einer zu der ersten und zweiten Ebene unterschiedlichen dritten Ebene angeordnet ist, dass der Hohlraum (6) zwischen dem Solarmodul (1) und der Auffangwanne (12) eingeschlossen wird, wobei
der Rahmen schwimmend in der Auffangwanne lagerbar ist

2. Gehäuse (7) nach Anspruch 1, wobei an wenigstens einer Längsseite (L1, L2) ein Wasserlauf (13) zum Auffangen und Ableiten von Wasser angeordnet ist.

3. Gehäuse (7) nach Anspruch 2, wobei an wenigstens einer Längsseite (L1, L2) der Wasserlauf (13) eine Aufnahmevorrichtung (14) zum Aufnehmen einer Bedachung aufweist.

4. Gehäuse (7) nach einem der vorherigen Ansprüche, wobei der Einlass (10) und/oder der Auslass (11) schlitzförmig ausgestaltet ist.

5. Gehäuse (7) nach einem der vorherigen Ansprüche, wobei der Rahmen (9) entlang wenigstens eines Teils seines Umfangs eine Falz (15) aufweist, die das Solarmodul (1) in einer Richtung senkrecht und/oder parallel zur ersten Ebene fixiert.

6. Gehäuse (7) nach einem der vorherigen Ansprüche, wobei an der ersten Querseite (T1) eine Abdeckung (16) zum flächenbündigen Aufnehmen der Bedachung und Abdecken des Auslasses (11) angeordnet ist, wobei die Abdeckung (16) den Auslass (11) abdeckt und einen Abfluss des Fluids seitlich zwischen Solarmodul (1) und Bedachung ermöglicht.

7. Dachintegriertes Solarsystem mit wenigstens einem Gehäuse (7) nach einem der vorherigen Ansprüche und wenigstens einem Solarmodul (1), wobei das Solarmodul (1) in den Rahmen (9) des wenigstens einen Gehäuses (7) angeordnet ist.

8. Dachintegriertes Solarsystem nach Anspruch 7 umfassend eine Mehrzahl an Gehäuse (7), wobei die Gehäuse (7) jeweils an den Längsseiten (L1, L2) derart miteinander verbindbar sind, dass ein zweites Gehäuse an einem Gehäuse angeordnet ist und/oder die Gehäuse (7) jeweils an den Querseiten (T1, T2) derart miteinander verbindbar sind, dass der Einlass (10) eines zweiten Gehäuses an dem Auslass (11) des ersten Gehäuses angeordnet ist.

9. Verwendung eines Gehäuses (7) nach einem der Ansprüche 1 bis 6 zum Montieren und Integrieren eines Solarmoduls (1) in eine Bedachung ohne Hinterlüftung, insbesondere in ein Schieferdach.

10. Verwenden eines dachintegrierten Solarsystems nach Anspruch 7 oder 8 als harte Bedachung.
